# EUROPÄISCHE PATENTSCHRIFT

(11) **EP 3 212 940 B1**
(45) Veröffentlichungstag und Bekanntmachung des Hinweises auf die Patenterteilung: **15.07.2020**
(21) Anmeldenummer: 15781973.1
(22) Anmeldetag: 21.10.2015
(51) Int. Cl.: F04D 25/06, F01N 3/32, F02B 33/40, F02M 25/08, F04D 29/42, F04D 29/059

(54) **ELEKTRISCH ANGETRIEBENE SPÜLLUFTPUMPE**
ELECTRICALLY DRIVEN PURGE AIR PUMP
POMPE DE BALAYAGE À ENTRAINEMENT ÉLECTRIQUE

(30) Priorität: 30.10.2014 DE 102014222241
(43) Veröffentlichungstag der Anmeldung: 06.09.2017
(73) Patentinhaber: Vitesco Technologies GmbH, 30165 Hannover (DE)
(72) Erfinder: WEIGL, Manfred, 93161 Sinzing (DE)
(74) Vertreter: Waldmann, Georg Alexander
(86) Internationale Anmeldenummer: PCT/EP2015/074398
(87) Internationale Veröffentlichungsnummer: WO 2016/066498

(56) Entgegenhaltungen:
- WO-A1-99/13223
- WO-A1-2012/080177
- DE-A1- 3 712 567
- DE-A1- 10 325 077

## Beschreibung

Die Erfindung betrifft eine elektrisch angetriebene Spülluftpumpe für Gase oder Gasgemische mit einem Pumpengehäuse und einem Motorgehäuse, wobei im Pumpengehäuse eine Radialpumpe mit einem Pumpenlaufrad ausgebildet ist, wobei das Pumpenlaufrad mit einer Antriebswelle verbunden ist, die durch eine Wandung des Pumpengehäuses in das Motorgehäuse ragt, wo die Antriebswelle mit einem Rotor eines Elektromotors verbunden ist, wobei zwischen der Antriebswelle und der Wandung des Pumpengehäuses zumindest ein Luftspalt ausgebildet ist, wobei im Pumpengehäuse ein Pumpeneinlass ausgebildet ist, der im zentralen Bereich des Pumpenlaufrades angeordnet ist und wobei im Pumpengehäuse eine Druckseite ausgebildet ist, die im äußeren radialen Bereich des Pumpenlaufrades angeordnet ist.

Zur Verringerung der von Kraftfahrzeugen ausgehenden Schadstoffemissionen wurden in den vergangenen Jahrzehnten zahlreiche Maßnahmen eingeführt. Eine dieser Maßnahmen besteht darin, Kraftstofftanksysteme einzusetzen, bei dem ein Kraftstofftank mit einem Speicherelement zur temporären Speicherung von Kohlenwasserstoffen verbunden ist. Bei der Betankung von Kraftfahrzeugen mit auf Kohlenwasserstoffen basierenden Kraftstoffen kommt es zum Ausgasen von Kohlenwasserstoffen aus dem Kraftstoff, wobei die Kohlenwasserstoffe nicht in die Atmosphäre gelangen sollen. Auch bei hohen Temperaturen oder Fahrten über unebene Untergründe kommt es verstärkt zu Ausgasungen von Kohlenwasserstoffen aus dem Kraftstoff, wobei effektiv dafür gesorgt werden muss, dass diese Kohlenwasserstoffe nicht in die Atmosphäre entweichen. Insbesondere bei Hybridfahrzeugen, bei denen der Verbrennungsmotor über weite Fahrstrecken vollständig still steht, müssen die ausgegasten Kohlenwasserstoffe effektiv zwischengespeichert werden, um später bei einem erneuten Starten des Verbrennungsmotors verbrannt zu werden. Hierzu haben sich Kraftstofftanksysteme bewährt, die aus einem Kraftstofftank und einem Speicherelement zur temporären Speicherung von Kohlenwasserstoffen bestehen, wobei der Kraftstofftank und das Speicherelement derart miteinander verbunden sind, dass die Kohlenwasserstoffe, die aus einem im Kraftstofftank befindlichen Kraftstoff ausgasen, in dem Speicherelement eingespeichert werden, wobei das Speicherelement mit einer ersten Leitung verbunden ist, durch die Frischluft zu dem Speicherelement förderbar ist, und das Speicherelement mit einer zweiten Leitung verbunden ist, die das Speicherelement mit einem Ansaugstrang des Verbrennungsmotors verbindet und durch die mit Kohlenwasserstoffen angereicherten Frischluft aus dem Speicherelement zu dem Ansaugstrang förderbar ist. Die Förderung der Frischluft durch das Speicherelement erfolgt mit Hilfe einer elektrisch angetriebenen Spülluftpumpe. Auf diese Art und Weise kann das Speicherelement zyklisch mit Frischluft gespült werden, und die eingespeicherten Kohlenwasserstoffe können dem Ansaugstrang eines Verbrennungsmotors zugeführt werden, wobei der Verbrennungsmotor über den Luftfilter und die Ansaugleitung mit Frischluft versorgt wird. Damit können die aus dem Kraftstofftank ausgegasten Kohlenwasserstoffe in dem Verbrennungsmotor verbrannt werden, und ein Entweichen der Kohlenwasserstoffe in die Atmosphäre wird sicher verhindert. Zur Förderung der Kohlenwasserstoffe aus dem Speicherelement zum Ansaugstrang wird nach dem Stand der Technik eine Spülluftpumpe eingesetzt, die zum Beispiel als Radialpumpe ausgebildet sein kann. Diese Spülluftpumpe muss bei relativ hohen Drehzahlen möglichst ein ganzes Fahrzugleben sicher funktionieren, was besondere Anforderungen an Dichtungselemente zwischen bewegten Teilen der Spülluftpumpe stellt.

Ein Kraftstofftanksystem mit einer Spülluftpumpe geht z.B. aus der WO 2012/080177 A1 hervor.

Die DE 37 12 567 A1 betrifft ein elektrisches Gebläse mit einem Elektromotor und ein von diesem angetriebenes Laufrad.

Aus der DE 103 25 077 A1 ist eine nach außen abgedichtete Pumpe für ein gasförmiges, eine Dampfphase enthaltenes Medium, insbesondere ein Gemisch aus Wasserstoff und Wasserdampf, mit einem in einem Motorraum angeordneten Motor, einem in einem Förderraum angeordneten Förderorgan und einem Lager bekannt.

Die WO 99/13223 A1 offenbart einen motorgetriebenen Luftkompressor mit einem internen Luftkühlungsstrom.

Eine Aufgabe der vorliegenden Erfindung ist es daher, eine kostengünstige elektrisch angetriebene Pumpe für Gase oder Gasgemische anzugeben, die über einen langen Einsatzzeitraum fehlerfrei arbeitet.

Die Aufgabe wird durch eine elektrisch angetriebene Pumpe für Gase oder Gasgemische nach dem unabhängigen Vorrichtungsanspruch gelöst.

Dadurch, dass im Bereich der Druckseite eine Öffnung durch das Pumpengehäuse ausgebildet ist, die den Innenraum des Pumpengehäuses mit dem Innenraum des Motorgehäuses verbindet, so dass sich der auf der Druckseite herrschende Druck in das Innere des Motorgehäuses ausbreiten kann, ist der Druck im Inneren des Motorgehäuses höher als der Druck im zentralen Bereich des Pumpenlaufrades, so dass durch den Luftspalt eine, durch die Druckdifferenz getriebene, Gasströmung aus dem inneren Bereich des Motorgehäuses entlang der Antriebswelle hin zum zentralen Bereich des Pumpenlaufrades entsteht. Durch diese Gasströmung können keine flüssigen oder festen Bestandteile, die durch den Pumpeneinlass mit dem angesaugten Gas oder Gasgemisch in das Pumpengehäuse gelangt sind in das Motorgehäuse vordringen. Diese Abdichtung der Antriebswelle im Bereich Ihres Durchganges durch eine Wandung des Pumpengehäuses erfolgt erfindungsgemäß ohne jegliches physikalisches Dichtelement allein durch eine vorteilhafte Gestaltung und Nutzung der Druckverhältnisse zwischen dem Inneren des Pumpengehäuses und dem inneren das Motorgehäuses. Da keinerlei physikalische Dichtelemente, wie zum Beispiel Simmer-Ringe, zur Abdichtung der rotierenden Antriebwelle benötigt werden, kann eine extrem haltbare und langlebige elektrisch angetriebene Pumpe für Gase oder Gasgemische bereitgestellt werden. Da die Gasströmung durch den Luftspalt im Vergleich zu der gesamten von der Pumpe geförderten Gasströmung nur sehr klein ist, verliert die Pumpe aufgrund Ihrer erfindungsgemäßen Gestaltung nur sehr wenig an Leistung, was im Hinblick auf den immensen Vorteil der verschleißfreien Abdichtung der Antriebswelle von untergeordneter Bedeutung ist. Die öff-nung ist mit einem Filterelement versehen, das das Eindringen von Flüssigkeit oder Festkörpern in das Innere des Motorgehäuses verhindert.

Bei einer Weiterbildung ist die Antriebswelle mit einem ersten Kugellager, das in der Wandung des Pumpengehäuses angeordnet ist, gelagert, wobei der Luftspalt zwischen den Kugeln des ersten Kugellagers verläuft. Das Kugellager ermöglicht die weitgehend ungehinderte Drehung der Antriebswelle, wobei der Druckunterschied zwischen dem Innenraum des Motorgehäuses und dem Innenraum des Pumpengehäuses im zentralen Bereich des Pumpenlaufrades einen kontinuierlichen Gasstrom hervorruft, der vom Innenraum des Motorgehäuses durch das erste Kugellager hin zum Innenraum des Pumpengehäuses führt und ein Eindringen von Flüssigkeit und/oder Festkörpern in den Innenraum des Motorgehäuses verhindert.

Bei einer nächsten Weiterbildung ist in oder an der Wandung des Pumpengehäuses und um die Antriebwelle herum eine ringförmige Scheibe ausgebildet, wobei einen Luftspalt zwischen der Antriebwelle und der ringförmigen Scheibe ausgebildet ist. Der Luftspalt zwischen der Antriebwelle und der ringförmige Scheibe kann sehr klein ausgeführt werden, ohne dass es zu einer Reibung zwischen der Antriebwelle und der ringförmige Scheibe kommt. Der kontinuierliche Gasstrom von dem Innenraum des Motorgehäuses zu dem Innenraum des Pumpengehäuses kann dadurch sehr klein sein, wodurch der Wirkungsgrad der elektrisch angetriebenen Pumpe durch diesen Gasstrom kaum verschlechtert wird.

Bei einer Ausgestaltung der Erfindung ist die Öffnung als Bohrung durch eine Wandung des Pumpengehäuses ausgebildet. Diese Bohrung befindet sich in der Wandung der Pumpe im Bereich der Druckseite, wodurch keine bewegten Teile im Kontakt mit der Bohrung stehen, was ebenso zutrifft, wenn die Öffnung als Bypass ausgebildet ist.

Erfindungsgemäß ist die elektrisch angetriebene Pumpe als Spülluftpumpe ausgebildet. Besonders beim Einsatz im Kraftfahrzeug erweist sich die Langlebigkeit der erfindungsgemäßen Spülluftpumpe als vorteilhaft. Hierzu kann die Spülluftpumpe Bestandteil eines Kraftstofftanksystems in einem Kraftfahrzeug sein.

Vorteilhafte Ausführungsformen der Erfindung werden im Folgenden anhand der Figuren beschrieben.
- Figur 1: zeigt einen Verbrennungsmotor mit einem Kraftstofftanksystem,
- Figur 2: zeigt eine erfindungsgemäße elektrisch angetriebene Pumpe,
- Figur 3: zeigt die Durchführung der Antriebswelle durch das Pumpengehäuse,
- Figur 4: zeigt die Anordnung der erfindungsgemäßen elektrisch angetriebenen Pumpe in einem Kraftfahrzeug,
- Figur 5: zeigt eine Ausgestaltung der erfindungsgemäßen elektrisch angetriebenen Pumpe.

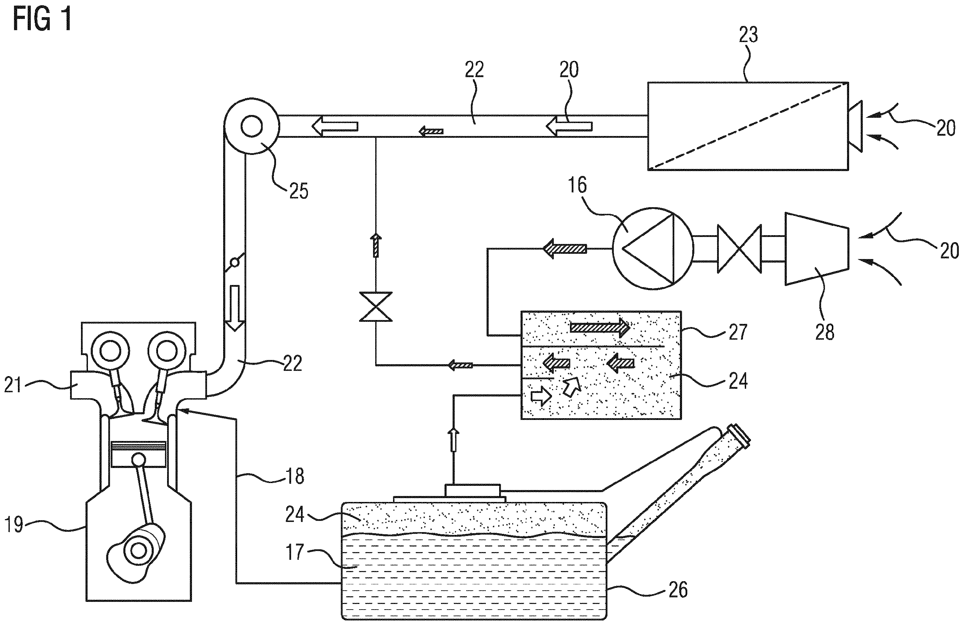

Figur 1 zeigt einen Verbrennungsmotor 19 mit einem Kraftstofftanksystem. Der Verbrennungsmotor 19 weist einen Abgasstrang 21 und einen Ansaugstrang 22 auf. Zur Rückgewinnung der im Abgas enthaltenen kinetischen Energie kann der Abgasstrang 21 mit einem Turbolader 25 ausgestattet sein, der die Ansaugluft im Ansaugstrang 22 komprimieren kann. Der Verbrennungsmotor 19 wird über den Ansaugstrang 22 mit Frischluft 20 versorgt. Ausgehend von der Frischluftseite wird Frischluft 20 über einen Ansaugluftfilter 23 in den Ansaugstrang 22 geführt und eventuell mit dem Abgasturbolader 25 oder einem Kompressor verdichtet und dann den Brennkammern des Verbrennungsmotors 19 zugeführt. Darüber hinaus wird dem Verbrennungsmotor 19 Kraftstoff 17 aus dem Kraftstofftank 26 über eine Kraftstoffleitung 18 zugeführt.

Figur 1 zeigt weiterhin das Kraftstofftanksystem mit dem Kraftstofftank 26 und einem Speicherelement 27 zur temporären Speicherung von Kohlenwasserstoffen 24. Der Kraftstofftank 26 und das Speicherelement 27 sind derart miteinander verbunden, dass die Kohlenwasserstoffe 24, die aus einem im Kraftstofftank 26 befindlichen Kraftstoff 17 ausgasen, in dem Speicherelement 27 eingespeichert werden können. Das Speicherelement 27 kann beispielsweise als Aktivkohlespeicher ausgebildet sein. Ein Aktivkohlespeicher ist ein geschlossener Kanister, in dem meist granularer Kohlenstoff derart angeordnet ist, dass sich an dem Kohlenstoff die zu speichernden Kohlenwasserstoffe 24 anlagern. Das Speicherelement 26 hat jedoch nur eine begrenzte Speicherkapazität, so dass das Speicherelement 26 regelmäßig entleert werden muss, indem Frischluft 20 z. B. über einen Spülluftfilter 28 angesaugt wird und über eine Leitung mithilfe einer Spülluftpumpe 16 in das Speicherelement 27 gesaugt oder gedrückt wird. Die Frischluft 20 durchströmt die Aktivkohle in dem Speicherelement 27 und nimmt dabei Kohlenwasserstoffe 24 auf, wonach die mit den Kohlenwasserstoffen 24 angereicherte Frischluft 20 entlang weiterer Leitungen zu dem Ansaugstrang 22 gefördert wird. In dem Ansaugstrang 22 vermischt sich die mit den Kohlenwasserstoffen 24 angereicherte Frischluft 20 mit der Frischluft 20, die über den Ansaugluftfilter 23 angesaugt wird. Damit können die Kohlenwasserstoffe 24 dem Verbrennungsmotor 19 zugeführt werden, wo die Kohlenwasserstoffe 24 in den Brennkammern des Verbrennungsmotors 19 verbrannt werden. Da das Kraftstofftanksystem leicht flüchtige Kohlenwasserstoffe 24 beinhaltet, ist es notwendig, die dauerhafte Funktion des gesamten Kraftstofftanksystems zu gewährleisten. Ein wesentlicher Bestendteil des Kraftstofftanksystems ist die Spülluftpumpe 16, die hier beispielhaft für die erfindungsgemäße elektrisch angetriebene Pumpe für Gase oder Gasgemische in den nachfolgenden Figuren näher dargestellt wird.

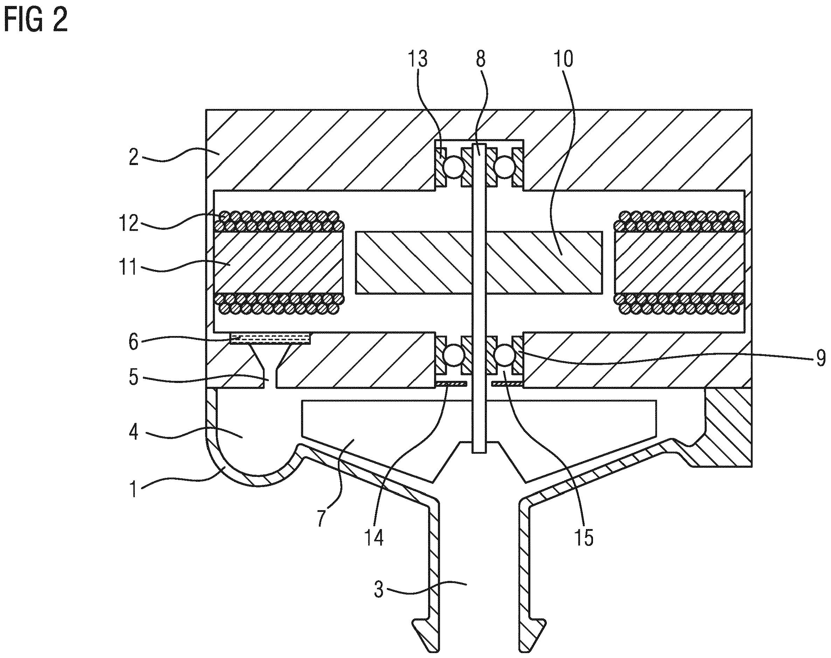

Figur 2 zeigt eine erfindungsgemäße elektrisch angetriebene Pumpe 16 für Gase oder Gasgemische. Die Pumpe weist ein Pumpengehäuse 1 und ein Motorgehäuse 2 auf. Sowohl das Pumpengehäuse 1 als auch das Motorgehäuse 2 sind gasdicht gegen die Außenwelt abgeschlossen. Beim Pumpengehäuse sind von der Gasdichtigkeit selbstverständlich der Pumpeneinlass 3 und ein hier nicht dargestellter auf der Druckseite 4 befindlicher Pumpenauslass ausgenommen. Im Pumpengehäuse 1 ist eine Radialpumpe mit einem Pumpenlaufrad 7 ausgebildet. Das Pumpenlaufrad 7 ist mit einer Antriebswelle 8 verbunden, die durch eine Wandung des Pumpengehäuses in das Motorgehäuse 2 ragt. Im Bereich des Durchbruches der Antriebswelle 8 durch die Wandung des Pumpengehäuses 1 ist die Antriebswelle 8 mit einem ersten Kugellager 9 drehbar gelagert. Darüber hinaus kann die Antriebswelle 8 auch im Motorgehäuse 2 mit einem zweiten Kugellager 13 gelagert sein. Die Antriebswelle 8 ist innerhalb des Motorgehäuses 2 mit dem Rotor 10 eines Elektromotors verbunden. Der hier dargestellte Elektromotor ist ein elektronisch kommutierter, bürstenloser Elektromotor. Bei dieser Art von Elektromotoren ist der Rotor 10 mit permanentmagnetischen Elementen ausgerüstet, und der Stator 11 ist mit Statorwicklungen 12 versehen. Die Statorwicklungen 12 stellen elektrische Spulen dar. Die Statorwicklungen werden mit einem entsprechend kommutierten Gleichstrom bestromt, so dass sie die im Rotor 10 integrierten Permanentmagnete anziehen, wodurch sich der Rotor dreht. Zwischen der Antriebswelle 8 und der Wandung des Pumpengehäuses 1 ist zumindest ein Luftspalt 15 ausgebildet. Darüber hinaus ist im Pumpengehäuse 1 ein Pumpeneinlass 3 ausgebildet, der sich im zentralen Bereich des Pumpenlaufrades 7 befindet. Über diesen Pumpeneinlass 3 wird der Gasstrom in das Pumpengehäuse 1 gesaugt und auf Grund der Drehung des Pumpenlaufrades 7 zu der im Pumpengehäuse 1 ausgebildeten Druckseite 4 befördert. Die Druckseite 4 befindet sich im äußeren radialen Bereich des Pumpenlaufrades 7. Im Bereich der Druckseite 4 ist eine Öffnung 5 zu erkennen, die das Pumpengehäuse 1 im Bereich einer Wandung durchbricht und damit den Innenraum des Pumpengehäuses 1 mit dem Innenraum des Motorgehäuses 2 verbindet. Durch diese Öffnung 5 kann sich der auf der Druckseite 4 herrschende Druck in das Innere des Motorgehäuses 2 ausbreiten. Da im zentralen Bereich des Pumpenlaufrades ein geringerer Druck herrscht als auf der Druckseite der Pumpe und damit im Inneren des Motorgehäuses 2, wird sich ein Gasstrom durch den Luftspalt 15 ausbilden. Der Luftspalt 15 kann in diesem Ausführungsbeispiel zum Beispiel durch Öffnungen zwischen den einzelnen Kugeln des ersten Kugellagers 9 gebildet werden. Der Druckausgleich über das Kugellager sorgt dafür, dass flüssige Bestandteile oder feste Bestandteile im Gasstrom, die durch den Pumpeneinlass 3 angesaugt werden, nicht in das Innere des Motorgehäuses 2 vordringen können. Die Öffnung 5 zwischen der Druckseite 4 des Pumpengehäuses und dem Inneren des Motorgehäuses 2 ist mit einem Filterelement 6 abgedeckt. Auch dieses Filterelement 6 sorgt dafür, dass flüssige oder feste Bestandteile, die sich im Gasstrom befinden, nicht in das Innere des Motorgehäuses eindringen können. Es sei darauf hingewiesen, dass das Filterelement 6 ein rein statisches Bauteil ist, das keinerlei Bewegung unterliegt, womit am Filterelement 6 kein mechanischer Verschleiß erfolgt. Die bewegten Teile der elektrisch angetriebenen Pumpe 16, wie zum Beispiel die Antriebswelle 8 oder das Kugellager 9, sind nicht von physikalisch ausgebildeten Dichtelementen umgeben, so dass auch hier kein Verschleiß entstehen kann. Zur Ausbildung eines noch feineren Luftspaltes 15 kann eine ringförmige Scheibe 14 vorgesehen sein, die mit der Wandung des Pumpengehäuses verbunden ist und um die Antriebswelle 8 herum angeordnet ist, wobei ein Luftspalt 15 zwischen der Antriebswelle und der ringförmigen Scheibe 14 ausgebildet ist. Dieser Luftspalt 15 kann sehr klein gehalten werden, ohne dass es zu mechanischen Berührungen zwischen der bewegten Antriebswelle 8 und der ringförmigen Scheibe 14 kommt. Damit ist die Leistungsminderung bzw. Wirkungsgradreduzierung der elektrisch angetriebenen Pumpe durch das Abzweigen eines Teilgasstromes zur Abdichtung der Welle extrem gering.

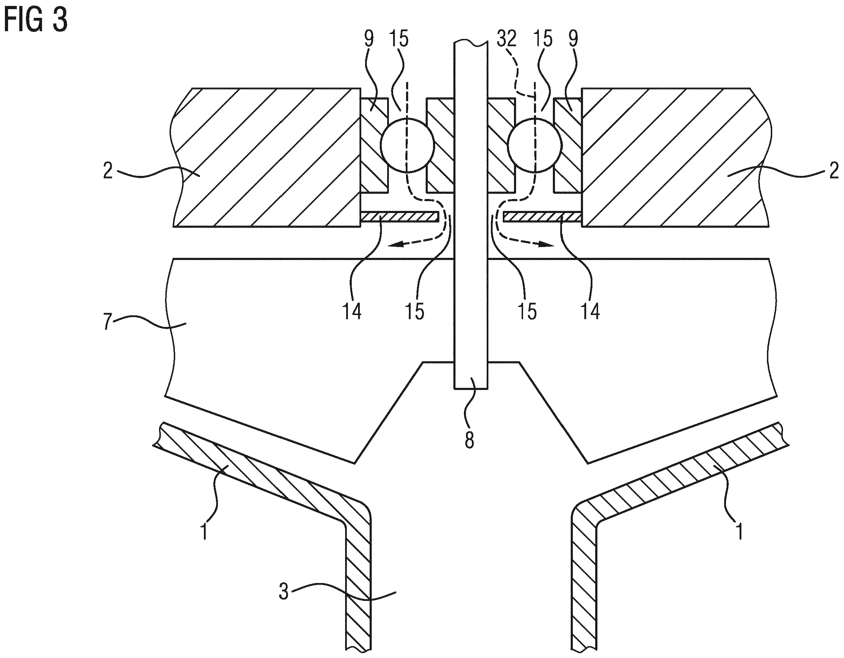

Figur 3 zeigt die Durchführung der Antriebswelle durch das Pumpengehäuse 1 in einer detaillierteren Darstellung. Zu erkennen ist die Antriebswelle 8, die in dem ersten Kugellager 9 gelagert ist. Das erste Kugellager 9 ist wiederum mit dem Pumpengehäuse 1 verbunden. Da im Inneren des Pumpengehäuses 1 im Bereich des Pumpeneinlasses 3 ein geringerer Druck herrscht als im Inneren des Motorgehäuses 2, entwickelt sich ein Teilgasstrom 32, der sich durch die Luftspalte 15 bewegt und dafür sorgt, dass flüssige oder feste Bestandteile im angesaugten Gas bzw. Gasgemisch nicht in den Innenraum des Motorgehäuses 2 vordringen können.

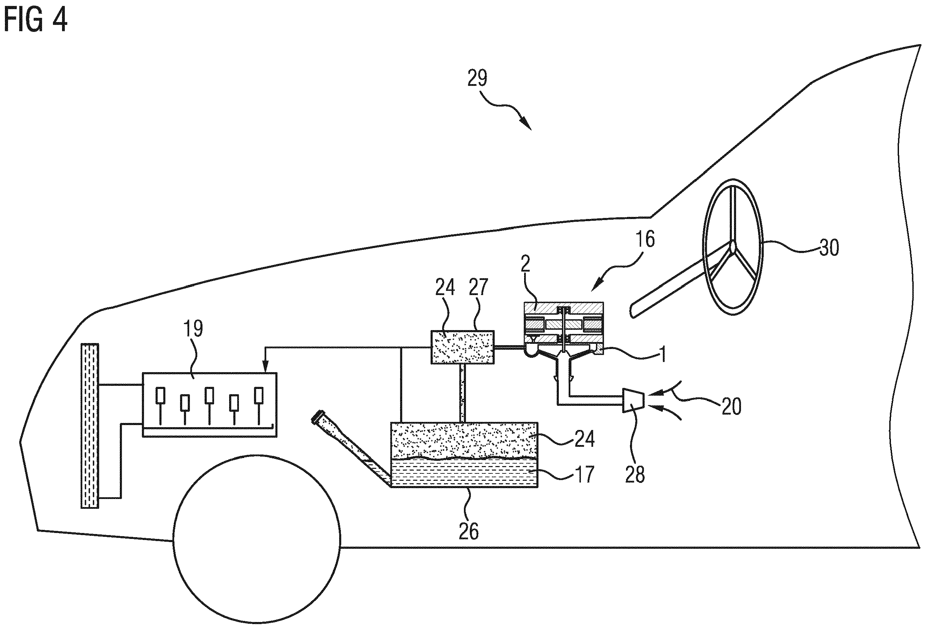

Figur 4 zeigt beispielhaft die Anordnung der erfindungsgemäßen elektrisch angetriebenen Pumpe 16 in einem Kraftfahrzeug 29. Im Kraftfahrzeug 29 ist ein Lenkrad 30 angedeutet. Die elektrisch angetriebene Pumpe 16 ist Bestandteil eines Kraftstofftanksystems, das hier zumindest aus einem Kraftstofftank 26, der mit Kraftstoff 17 gefüllt ist, und einem Speicherelement 27 zur Einspeicherung von flüchtigen Kohlenwasserstoffen 24 ausgebildet ist. Zu erkennen ist, dass die elektrisch angetriebene Pumpe als Spülluftpumpe 16 ausgebildet ist. Durch den Spülluftfilter 28 kann Spülluft mit Hilfe der Spülluftpumpe 16 angesaugt werden und in das gefüllte Speicherelement 27 gepresst werden, wodurch Kohlenwasserstoffe 24 über die Leitungen hin zum Ansaugtrakt des Verbrennungsmotors 19 befördert werden. In Figur 4 ist die Einbaulage der elektrisch angetriebenen Pumpe 16 für Gase oder Gasgemische zu erkennen. Deutlich ist, dass das Pumpengehäuse 1 jedenfalls unterhalb des Motorgehäuses 2 angeordnet sein muss. Dadurch können auch im Falle des Stillstandes der Spülluftpumpe 16 keine Flüssigkeit oder Festkörper in das Motorgehäuse 2 eindringen.

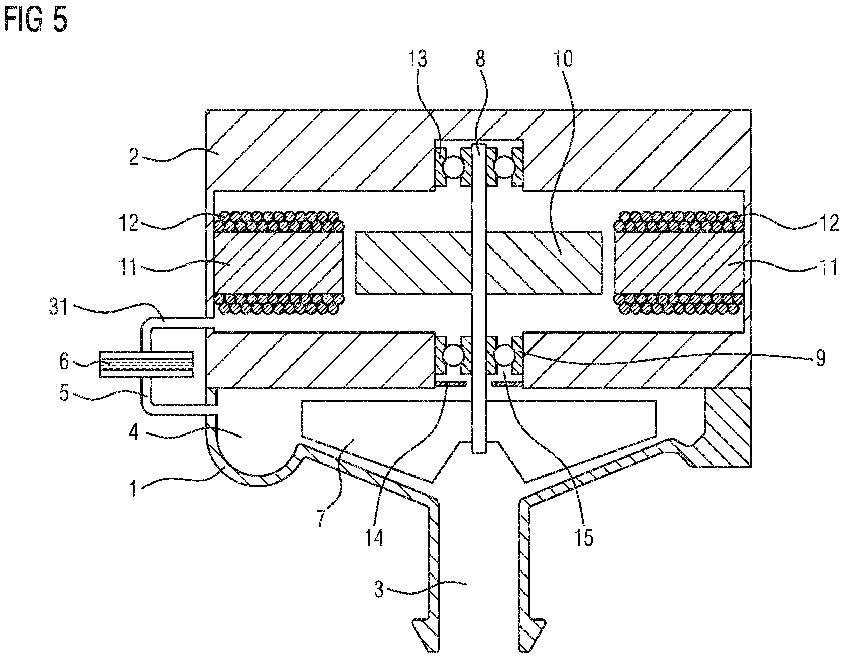

Figur 5 zeigt eine Ausgestaltung der erfindungsgemäßen elektrisch angetriebenen Pumpe 16 für Gase oder Gasgemische. Zu erkennen ist hier, dass die Öffnung 5 als Bypass 31 ausgebildet ist, wobei der Bypass 31 die Druckseite 4 des Pumpengehäuses 1 mit dem Inneren des Motorgehäuses 2 verbindet. Innerhalb des Bypasses 31 ist wiederum ein Filterelement 6 zu erkennen, das das Eindringen von flüssigen oder festen Bestandteilen aus dem Gas oder Gasgemisch in das Innere des Motorgehäuses 2 verhindert.

## Patentansprüche

1. Elektrisch angetriebene Spülluftpumpe (16) für Gase oder Gasgemische mit einem Pumpengehäuse (1) und einem Motorgehäuse (2), wobei im Pumpengehäuse (1) eine Radialpumpe mit einem Pumpenlaufrad (7) ausgebildet ist, wobei das Pumpenlaufrad (7) mit einer Antriebswelle (8) verbunden ist, die durch eine Wandung des Pumpengehäuses (1) in das Motorgehäuse (2) ragt, wo die Antriebswelle (8) mit einem Rotor (10) eines Elektromotors verbunden ist, wobei zwischen der Antriebswelle (8) und der Wandung des Pumpengehäuses (1) zumindest ein Luftspalt (15) ausgebildet ist, wobei im Pumpengehäuse (1) ein Pumpeneinlass (3) ausgebildet ist, der im zentralen Bereich des Pumpenlaufrades (7) angeordnet ist und wobei im Pumpengehäuse (1) eine Druckseite (4) ausgebildet ist, die im äußeren radialen Bereich des Pumpenlaufrades (7) angeordnet ist, wobei im Bereich der Druckseite (4) eine Öffnung (5) durch das Pumpengehäuse (1) ausgebildet ist, die den Innenraum des Pumpengehäuses (1) mit dem Innenraum des Motorgehäuses(2) verbindet, so dass sich der auf der Druckseite (4) herrschende Druck in das Innere des Motorgehäuses (2) ausbreiten kann, wobei die Öffnung (5) mit einem Filterelement (6) versehen ist, das das Eindringen von Flüssigkeiten oder Festkörpern in das Innere des Motorgehäuses (2) verhindert.

2. Elektrisch angetriebene Spülluftpumpe (16) nach Anspruch 1, **dadurch gekennzeichnet, dass** die Antriebswelle (8) mit einem ersten Kugellager (9), das in der Wandung des Pumpengehäuses (1) angeordnet ist, gelagert ist, wobei der Luftspalt (15) zwischen den Kugeln des ersten Kugellagers (9) verläuft.

3. Elektrisch angetriebene Spülluftpumpe (16) nach Anspruch 1 oder 2, **dadurch gekennzeichnet, dass** in oder an der Wandung des Pumpengehäuses (1) und um die Antriebwelle (8) herum eine ringförmige Scheibe (14) ausgebildet ist, wobei ein Luftspalt (15) zwischen der Antriebwelle (8) und der ringförmigen Scheibe (14) ausgebildet ist.

4. Elektrisch angetriebene Spülluftpumpe (16) nach einem der vorgenannten Ansprüche, **dadurch gekennzeichnet, dass** die Öffnung (5) als Bohrung durch eine Wandung des Pumpengehäuses (1) ausgebildet ist.

5. Elektrisch angetriebene Spülluftpumpe (16) nach einem der Ansprüche 1-3, **dadurch gekennzeichnet, dass** die Öffnung (5) als Bypass (31) ausgebildet ist.

6. Kraftstofftanksystem in einem Fahrzeug mit einer elektrisch angetriebenen Spülluftpumpe (16) nach einem der vorgenannten Ansprüche.

## Claims

1. Electrically driven purge air pump (16) for gases or gas mixtures having a pump housing (1) and a motor housing (2), wherein a radial pump having a pump impeller (7) is formed in the pump housing (1), wherein the pump impeller (7) is connected to a drive shaft (8) which extends through a wall of the pump housing (1) into the motor housing (2), where the drive shaft (8) is connected to a rotor (10) of an electric motor, wherein at least one air gap (15) is formed between the drive shaft (8) and the wall of the pump housing (1), wherein a pump inlet (3), which is arranged in the central region of the pump impeller (7), is formed in the pump housing (1), and wherein a pressure side (4) is formed in the pump housing (1), which pressure side is arranged in the outer radial region of the pump impeller (7), wherein, in the region of the pressure side (4), an opening (5) is formed through the pump housing (1), which opening connects the interior of the pump housing (1) to the interior of the motor housing (2), so that the pressure prevailing on the pressure side (4) can be propagated into the interior of the motor housing (2), wherein the opening (5) is provided with a filter element (6), which prevents the ingress of liquids or solid bodies into the interior of the motor housing (2).

2. Electrically driven purge air pump (16) according to Claim 1, **characterized in that** the drive shaft (8) is mounted with a first ball bearing (9), which is arranged in the wall of the pump housing (1), wherein the air gap (15) extends between the balls of the first ball bearing (9).

3. Electrically driven purge air pump (16) according to Claim 1 or 2, **characterized in that** an annular disc (14) is formed in or on the wall of the pump housing (1) and around the drive shaft (8), wherein an air gap (15) is formed between the drive shaft (8) and the annular disc (14).

4. Electrically driven purge air pump (16) according to one of the preceding claims, **characterized in that** the opening (5) is formed as a bore through a wall of the pump housing (1).

5. Electrically driven purge air pump (16) according to one of Claims 1-3, **characterized in that** the opening (5) is formed as a bypass (31).

6. Fuel tank system in a vehicle having an electrically driven purge air pump (16) according to one of the preceding claims.

## Revendications

1. Pompe à air de purge à entraînement électrique (16) pour des gaz ou des mélanges de gaz, comprenant un corps de pompe (1) et un carter de moteur (2), dans laquelle une pompe radiale comportant une roue de pompe (7) est réalisée dans le corps de pompe (1), dans laquelle la roue de pompe (7) est reliée à un arbre d'entraînement (8), qui pénètre à travers une paroi du corps de pompe (1) dans le carter de moteur (2), où l'arbre d'entraînement (8) est relié à un rotor (10) d'un moteur électrique, dans laquelle au moins un espace d'air (15) est réalisé entre l'arbre d'entraînement (8) et la paroi du corps de pompe (1), dans laquelle une entrée de pompe (3), qui est disposée dans la zone centrale de la roue de pompe (7), est réalisée dans le corps de pompe (1) et dans laquelle un côté pression (4), qui est disposé dans la zone radiale externe de la roue de pompe (7), est réalisé dans le corps de la pompe (1), dans laquelle, dans la zone côté pression (4), une ouverture (5) qui relie l'espace interne du corps de pompe (1) à l'espace interne du carter de moteur (2) est réalisée au travers du corps de pompe (1) de telle sorte que la pression qui s'exerce sur le côté pression (4) puisse se propager à l'intérieur du carter de moteur (2), dans laquelle l'ouverture (5) est munie d'un élément filtrant (6) qui empêche la pénétration de liquides ou de solides à l'intérieur du carter de moteur (2).

2. Pompe à air de purge à entraînement électrique (16) selon la revendication 1, **caractérisée en ce que** l'arbre d'entraînement (8) est supporté par un premier roulement à billes (9) qui est disposé dans la paroi du corps de pompe (1), dans laquelle l'espace d'air (15) s'étend entre les billes du premier roulement à billes (9).

3. Pompe à air de purge à entraînement électrique (16) selon la revendication 1 ou 2, **caractérisée en ce qu'**un disque annulaire (14) est réalisé dans ou sur la paroi du corps de pompe (1) et autour de l'arbre d'entraînement (8), dans laquelle un espace d'air (15) est réalisé entre l'arbre d'entraînement (8) et le disque annulaire (14).

4. Pompe à air de purge à entraînement électrique (16) selon l'une des revendications précédentes, **caractérisée en ce que** l'ouverture (5) est réalisée sous la forme d'un perçage au travers d'une paroi du corps de pompe (1).

5. Pompe à air de purge à entraînement électrique (16) selon l'une des revendications 1-3, **caractérisée en ce que** l'ouverture (5) est réalisée sous la forme d'une dérivation (31) .

6. Système de réservoir de carburant d'un véhicule équipé d'une pompe à air de purge à entraînement électrique (16) selon l'une des revendications précédentes.
